# EUROPEAN PATENT APPLICATION

(11) **EP 2 779 078 A1**
(43) Date of publication of application: **17.09.2014**
(21) Application number: 14160088.2
(22) Date of filing: 14.03.2014
(51) Int. Cl.: G06Q 30/02

(54) **Feedback to advertisers for specifically viewed advertisements that generate purchases**

(30) Priority: 15.03.2013 US 201361793954 P
(71) Applicant: Absolute Software Corporation, Vancouver, BC V7X 1K8 (CA)
(72) Inventor: Loveland, Damien, Richmond BC, V7C 5N6 (CA)
(74) Representative: Kalkoff & Partner

(57) **Abstract**

A user's interaction with online ads is saved and associated with the user's later in-store purchases. Users control whether associations between the purchases and ads are divulged to an ad serving entity or any other entity. In return for divulging the associations, the user receives a consideration of value from the ad serving entity. As a result, the ad serving entity is in a position to bill the advertiser on a pay-per-purchase basis, and advertisers can obtain clear and specific performance indicators for their ads.

## Description

### Technical Field

The subject matter disclosed herein relates to the serving of online advertising, and in particular to the tracking of interactions with ads on predominantly mobile devices that lead to purchases.

### Background

There is a constant need for advertisers to obtain ever increasing accuracy when measuring the success of an ad (i.e. an advert or advertising campaign). There is also a continuing need for advertisers to target their ads more efficiently. In conjunction with this is an increasing objection that consumers have to invasion of their privacy.

Online advertisers are able to count the number of impressions of an ad, count the number of clicks on an ad and in some cases obtain the profiles of electronic device users who view or otherwise interact with the ads. Separately, the advertisers can monitor the number of sales of their products, and while there may be some statistical correlation between an advertising campaign and an increase in sales, it is difficult or impossible to link a user's specific ad view to that same user's later purchase of an advertised item. Purchasers of goods and services are often asked where they heard about the vendor making the sale, whether it be an online sale or at a brick-and-mortar location. These questions are usually general in nature, such as whether they heard about the vendor on TV, the radio, in a newspaper, by word of mouth, via a search engine, etc. The purchaser cannot always remember, and may not really care to remember, especially as this is something of no value to the purchaser. Furthermore, none of these questions ask about a specific online ad. The problem is that advertisers do not receive feedback about whether specific, viewed ads lead to purchases.

Another problem, which is mainly associated with mobile advertising, particularly on smart phones, is that many clicks are made by accident due to the relatively small screen area on smart phones as compared to tablets, notebooks and laptops with touch sensitive screens. A further problem with advertising on mobile devices is that it is more difficult to track whether the ads lead to purchases or not, which, while problematic, is not so much of a problem with advertising on desk tops since many purchases are completed via the landing site for the ad.

U.S. Patent No. 8,311,845 to Vengroff discloses a system that bills an advertiser when a user visits a location specified by the ad. The system bills the advertiser under the assumption that, but for the ad, the user would not have visited the location.

United States Patent No. 8,073,460 to Scofield et al. discloses a system in which a user's movement pattern is analyzed and ads for specific retail locations are charged for based on the user's predicted probability of visiting the location.

U.S. Patent Application Publication 2012/0239491 to Kruglick discloses a system that monitors users' purchases made with their mobile devices and statistically correlates them with previously served ads.

United States Patent No. 8,301,125 to Ramer et al. discloses a system for targeted delivery of advertising on mobile devices based on navigation requests.

The prior art generally takes personal information, such as ads clicked, locations visited and purchases made, and uses it to benefit commercial entities. Little control or consideration is given to a user's privacy.

### Summary

The subject matter described herein provides a system, server, device and method for linking purchases to previously-viewed online ads. Purchases may be made with the mobile device that the ads were served on. Consumers viewing the served ads and making purchases are able to control whether or not their information is released to the advertisers. In return for releasing their private information, consumers may receive cash back or other consideration of value. When consumers release the information, which at a minimum includes the fact that they previously viewed or otherwise positively interacted with (e.g. by clicking on) a particular ad prior to making a particular purchase, the information is passed to the ad server, which can then bill the advertiser. The advertiser therefore pays the ad server for displaying an ad that is assumed to have resulted in a sale. The amount of payment may be determined using a bidding process, a commission basis, or other manner, and may be in addition to an amount paid based on other parameters such as the number of impressions or the number of clicks.

Disclosed herein is a system for tracking purchases related to previously viewed ads comprising: a computer readable storage for storing histories of ad interactions; a module for detecting when a payment has occurred; a module for associating the payment with an ad; a module for receiving a user's permission to divulge said association; a module for charging an advertiser, who placed the ad, after said permission has been received and said association has been divulged; and a module for remunerating said user after said association is divulged.

Further disclosed herein is a non-transitory computer readable medium having stored thereon a mobile application, said mobile application comprising executable program code that directs a mobile device to perform a process that comprises: maintaining a record of ads accessed on the mobile device; detecting a purchase of an item, said purchase made using the mobile device; determining, based on the record of accessed ads, whether the item purchased is associated with an ad accessed on the mobile device; and presenting a user of the mobile device with an option to disclose, to an entity associated with the ad, information that associates the purchase with a user access to the ad. Presenting the option may be in response to detecting that the purchased item is associated with an accessed ad. The process may comprise calculating a monetary compensation amount to be paid to the user in exchange for disclosing the information.

Still further disclosed herein is a computer-implemented method, comprising: maintaining, in computer storage, a record of ads accessed by a user on one or more devices; detecting a purchase of an item, said purchase made using one of said devices; determining, based on the record of accessed ads, whether the item purchased is associated with an ad accessed on the one or more devices; and presenting the user of the one or more devices with an option to disclose, to an entity associated with the ad, information that associates the purchase with a user access to the ad. The record may be maintained by a persistent agent in the mobile device. The method may further comprise maintaining a record of ads that are removed by the user from the one or more devices; and transmitting such record to the entity.

This summary is not an extensive overview intended to delineate the scope of the subject matter that is described and claimed herein. The summary presents aspects of the subject matter in a simplified form to provide a basic understanding thereof, as a prelude to the detailed description that is presented below.

### Brief Description of the Drawings

For a fuller understanding of the nature and advantages of the disclosed subject matter, as well as the preferred mode of use thereof, reference should be made to the following detailed description, read in conjunction with the accompanying drawings. In the following drawings, like reference numerals designate like or similar parts or steps.
FIG. 1 is a schematic functional block diagram of an embodiment of a system for managing release of personal information relating to a user's purchase;
FIG. 2 is a flowchart of the main steps of a process performed by the system of Figure 1;
FIG. 3 is a screen shot of a user's personal mobile electronic device;
FIG. 4 is an alternate screen shot of a user's personal mobile electronic device;
FIG. 5 is a detailed swim-line diagram of a process performed by the system of Figure 1;
FIG. 6 is a screen shot of a desk top computer showing a 'store' button; and
FIG. 7 is a flowchart of the main steps of a process performed by an ad store button system.

### Detailed Description

The detailed descriptions within are presented largely in terms of methods or processes, symbolic representations of operations, functionalities and features of the invention. These method descriptions and representations are the means used by those skilled in the art to most effectively convey the substance of their work to others skilled in the art. A software implemented method or process is here, and generally, conceived to be a self-consistent sequence of steps leading to a desired result. These steps involve physical manipulations of physical quantities. Often, but not necessarily, these quantities take the form of electrical or magnetic signals capable of being stored, transferred, combined, compared, and otherwise manipulated. It will be further appreciated that the line between hardware, software and firmware is not always sharp, it being understood by those skilled in the art that software implemented processes may be embodied in hardware, firmware, or software, in the form of coded instructions such as in microcode and/or in stored programming instructions.

In general, unless otherwise indicated, singular elements may be in the plural and vice versa with no loss of generality. The use of the masculine can refer to masculine, feminine or both. Drawings are not necessarily to scale.

### System

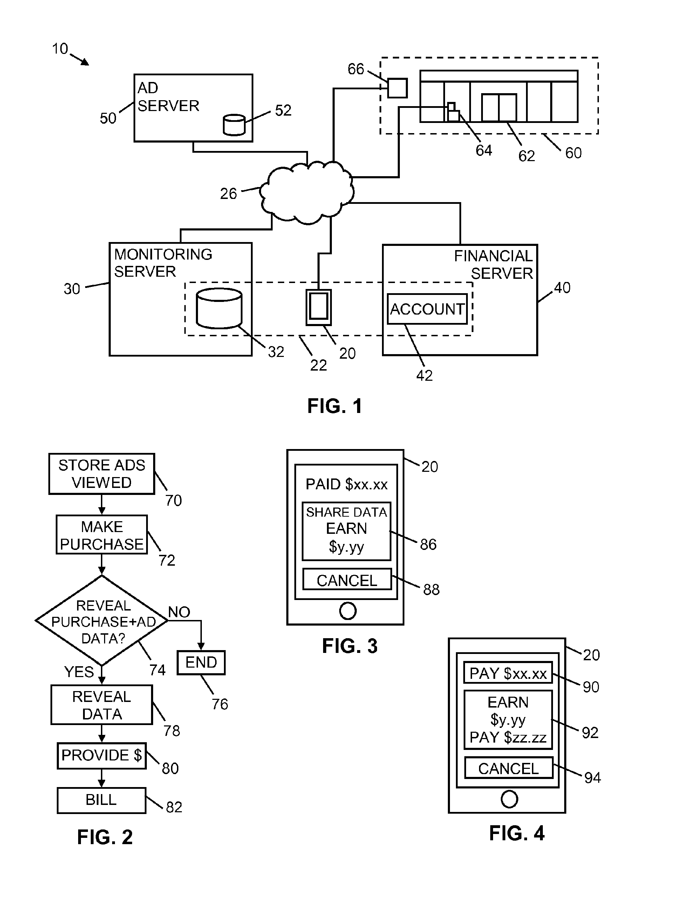

FIG. 1 illustrates an embodiment of a system 10 for managing the release of personal information to advertising companies (and/or advertisers or other entities) following purchases made by consumers. A user's personal mobile electronic device 20, such as a smart phone, is one of the user-owned assets 22 that comprise the system 10, and is connected into the system via network 26. The network 26 may be the internet, an Ethernet, a telecommunications network or any combination thereof. A monitoring server 30 may store the user's personal data 32 in a database. Such personal data 32 may include the user's location, a history of the user's location and various identifying indicia for the user and/or the user's mobile device 20. The personal data 32 may also include full or partial details of browsing history, details of ads clicked, details of ads seen but not clicked, and details of when and for how long ads were viewed. A financial server 40 may include a user's personal account 42. The financial server may be that of a bank, a credit card, an electronic wallet, an internet payment management system, etc. The user may authorize debits from the account 42 when he uses mobile device 20 to purchase goods and services. Such purchases may be completed by the user agreeing to pay an electronic bill, for example, which may be received via email or via an app (i.e. application) installed on the mobile device 20. Such purchases may also be completed by NFC (i.e. near field communications) if the mobile device 20 is equipped with an NFC reader and/or NFC tag.

Also shown in FIG. 1 is ad server 50. Besides possibly operating in the usual sense, ad server 50 may be configured to operate according to the system 10 in the pay-per-purchase mode. In this sense, the ad server 50 includes data 52 specifically provided to it by the user. This data 52 may be a subset of data 32, and may include the fact that the user has made a purchase and that the user had previously viewed or otherwise positively interacted with an ad relating to the purchase. Individual ads served by the ad server 50 are created by business enterprises, such as business 60 having a brick and mortar store 62 (a.k.a. shop), in which there is a point of sales terminal 64 connected to the system 10 via the network 26. The business 60 can create and manage its ads via computer 66 connected to the ad server 50. A single mobile device 20 and a single business 60 are illustrated in FIG. 1 for simplicity of presentation; however it will, of course, be understood that systems 10 comprising pluralities of mobile devices 20 and/or businesses 60 and/or other system components are also contemplated.

It is also to be understood that the electronic devices and servers described herein include one or more processors connected to one or more memories, in which are stored computer executable instructions and computer readable data. The functions of the system are achieved by the processor executing the instructions and reading and storing the data. Furthermore, the various electronic devices and servers include the necessary interfaces to enable them to connect to the network 26 and communicate with the other devices and servers connected to the network.

### Basic Process

The key steps of the process carried out by system 10 are shown in FIG. 2. In step 70, the system records a positive interaction with one or more ads displayed on the user's mobile electronic device 20 by, for example, storing identities of the ads that have been viewed. The interaction event(s) may be stored in a database 32 in the monitoring server 30. In some embodiments, the event(s) may be stored initially in the device 20 and uploaded from time to time to the monitoring server 30, or they may be uploaded as and when they occur. Later, in step 72, the user of the mobile device 20 makes a purchase that is related to one or more of the stored ads. While or after making the purchase, the user is given a chance, in step 74, to decide whether or not to reveal the purchase and any related ad data to, for example, the advertiser and the advertising company that served the ad. Of course, the user may optionally have pre-approved the automatic revealing of such information in settings related to the system. If the user chooses not to reveal the data, then the process stops at step 76 and data 52 is not revealed. If the user chooses to reveal the data, then the data is revealed in step 78. In revealing the data, the data may be provided to one or more of the ad server 50, the business 60 providing the goods or services, and the financial server 40. The data may be provided directly from the mobile device 20 or from the monitoring server 30. In step 80, the recipient of the data, which is typically the ad server 50, provides a monetary payment or something else of value to the user in return for the user's revealing the data. There are many ways in which the monetary payment can be fulfilled, including channeling to other recipients. The system 10 can then bill the advertiser in step 82.

FIG. 3 illustrates a representative mobile device 20 with an example of a screen that may be displayed to the user at the point of purchase if the user is using the device to complete the financial transaction for the purchase. In the illustrated embodiment, the purchase has been completed with a swipe of the device over an NFC point of sale terminal.

The amount paid for the purchase is $xx.xx. The user has the option, by clicking button 86, to reveal the fact that the purchase has occurred and the fact that the user previously interacted with an ad related to the purchase, in return for earning $y.yy. There is also the option to cancel by clicking button 88.

The mobile device 20 in this configuration is a user interface via which the user effectively sells information that he does not necessarily remember. If the revealing of purchase information and corresponding ad viewing history has been set to automatic, then, based on a common, single input, the interface serves the double purpose of making the purchase and feeding back information to the advertiser that a specific ad relating to the specific purchase was viewed. The single input is the act of using the device to purchase goods or services, and may or may not include the input of a PIN (Personal Identification Number) or other code or performing a verification step using the device. In this embodiment, neither the share button 86 nor the cancel button 88 would not be shown. Instead, there may be an optional confirmatory message displayed, indicating to the user that the data about the purchase was shared, in addition to any confirmation message indicating that the purchase was completed.

As can be seen in the figure, the buttons are relatively large compared to the size of the screen, in particular the "share" button 86. This minimizes the likelihood of a user accidentally clicking the wrong button as is often the case for small screens. Optionally, the user may be required to double-click one or both of these buttons as another measure to minimize the risk that the user clicks the wrong button. Sill, alternatively, the user may be prompted with a confirmatory button after clicking one or both of these buttons.

In another embodiment, FIG. 4 shows a mobile device 20 with an alternate example of a screen that may be displayed to the user at the point of purchase if the user is using the device to complete the financial transaction for the purchase. Here, the purchase is completed with two swipes of the device with an NFC point of sale terminal. The screen of FIG. 4 may be displayed after the first swipe, when the sales clerk has entered the transaction information into the point of sales terminal. The amount of the purchase is $xx.xx and the user has the option to pay this amount by tapping the soft button 90. Alternately, the user has the option to reveal the fact that the purchase is occurring and the fact that the user previously interacted with an ad related to the purchase, in return for earning $y.yy, which is deducted from the amount to be paid to result in a net amount $zz.zz to be paid for the purchase. There is also the option to cancel by clicking button 94. After making the selection, the user then swipes the device over the NFC terminal to complete the transaction. The mobile device and/or the NFC payment terminal then informs the ad server that the transaction has occurred.

As is common practice with e-payment methods, a PIN may be required to be entered into the mobile device, or it may be conditionally be required depending on the amount of the transaction.

### Detailed Process

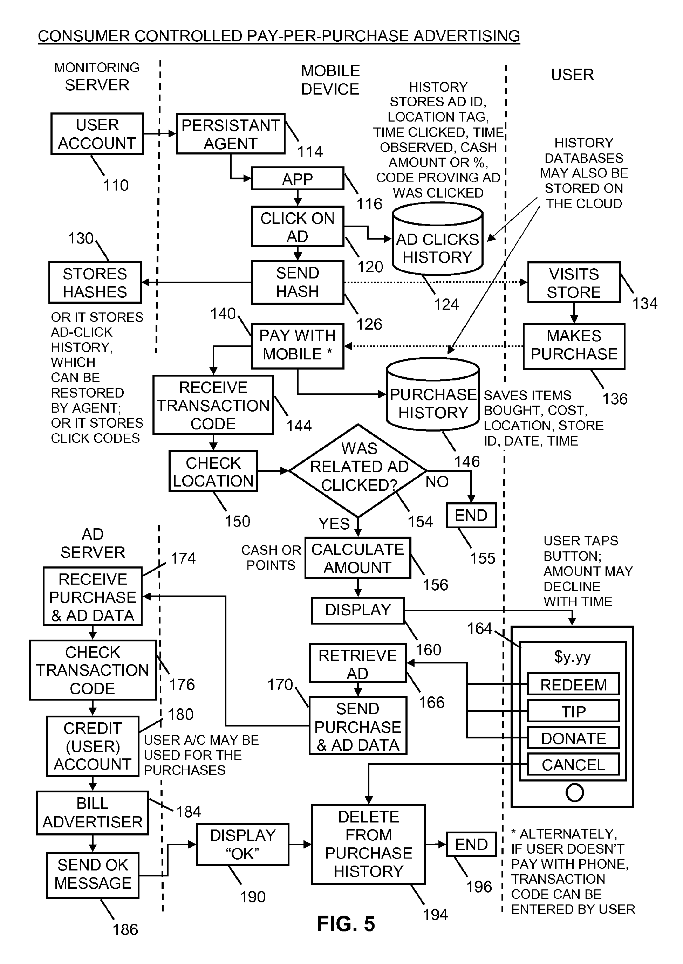

An exemplary process undertaken by the system 10 is shown in greater detail in FIG. 5. In step 110, a user account is set up at the monitoring server 30 (e.g. an Absolute SoftwareTM server) for monitoring the user's device and/or user data such as interactions with ads. As a result, a persistent agent is activated on the user's mobile device 20 in step 114. The persistent agent ensures the availability of an Ad History App (i.e. "AHA") in step 116 on the mobile device 20. The AHA may be activated whenever the user uses a browser on the mobile device, or when viewing in-app ads on the device. When a user, in step 120, clicks on an ad or otherwise views it or interacts with it, the AHA stores the event in a database in the mobile device at step 124. The stored data may include identification of the ad, location of the user when the ad was viewed, location representing point of sale for goods and/or services advertised, the date and time the ad was viewed, the duration of time the ad was viewed, a code in the ad representing a specific cash back amount or a percentage cash back amount, a flag indicating that the ad was clicked rather than merely displayed, and any other pertinent data.

Upon clicking (and/or viewing or interacting with) the ad, or afterwards, the AHA sends, in step 126, an identification of the ad to the monitoring server, which may be in the form of a hash, for example. The monitoring server 30 then stores the hash in database 32 in step 130. The user's ad-click history, whether in the form of hashes, click codes or direct identification of the ads themselves, is therefore stored in a reliable, remote location that can be trusted to provide accurate records whenever called upon and when permission is granted to do so. Having a local cache, i.e. database 124, of ad clicks reduces the access demands that may be placed on remote database 32, and reduces the bandwidth usage in accessing it, especially if a large number of mobile devices are connected to the system, a large number of ads are being viewed and a large number of purchases are being made.

In step 134, the user of the mobile device visits a store and makes a purchase in step 136. The mobile device is used to make the purchase in step 140. The application on the mobile device via which the purchase is made may be the AHA itself, or it may be a separate application from which purchase information can be extracted. The AHA stores the details of the purchase in a purchase history database 146, which may include details such as item or service bought, cost, location, date, time, store ID, etc. When the purchase is complete, a transaction code is received by the mobile device 20, from either the merchant or the payment processor the merchant is using, in step 144. In the illustrated embodiment, the AHA checks the location of the mobile device in step 150. This may be done using GPS, Wi-Fi triangulation and/or other known techniques, in order to determine which store the user is in. In other embodiments, this step is optional because the location (or, equivalently, an identification of the store) may be included in a transaction code received during a purchase. The AHA then determines whether a related ad was previously clicked in step 154.

To determine whether a related ad was previously clicked, the AHA compares information received in the transaction code with information stored in the ad click history database 124. The transaction code may include information that identifies the item bought and/or the store ID, and optionally the amount paid, the location of the purchase, date and time, for example. It may simply identify that a purchase was made, and the AHA will then use the location derived in step 150 and a map or database of store locations to determine which store the purchase was made at. The ad click history database 124 stores information relating to the ads clicked or otherwise interacted positively with, such as one or more of an ad ID, one or more product or service IDs advertised by the ad, and one or more locations where the goods and/or services may be bought. For example, the transaction code may identify a certain product purchased, and the ad history database may identify that an ad for such product was previously viewed. As a result, there is a match between the purchase and the previously viewed ad, and the AHA will therefore determine that a related ad was previously clicked. As another example, the transaction ID may include an identification of the store where an item was purchased, and the ad history database 124 may include an entry of a viewed ad with information about several stores, one of which is where the purchase was made. The identification of the actual item bought may not be of importance, but rather a determination just that a purchase was made. Here, again, there is a match between the purchase and the previously viewed ad, and the AHA will determine that a related ad was previously clicked. Having a local cache, i.e. database 124, of ad clicks reduces the time required for the AHA to relate a purchase to a previously viewed ad, and it can also improve the reliability of making such a determination in situations where the connection may fail.

If no related ad was clicked, the process ends in step 155. If a related ad was previously clicked, the AHA retrieves or calculates, in step 156, the amount that is associated with revealing the related ad and purchase details. This amount is then displayed on the device in step 160. As a result, the user may be presented with options as shown at display step 164. The amount that may be earned is shown as $y.yy and the user has the option to redeem it, to use it to tip the assistant helping the purchaser, to donate it to a charity, or to cancel the redemption of it. With any of the first three options, the ad or an identification of it is retrieved, in step 166, and then the ad data and purchase data are sent, in step 170, to the ad server. The purchase data may include a transaction code, the location of the purchase, the store ID, the purchased item(s), the date and time, etc. When the ad server receives, in step 174, the purchase and ad data, it checks the transaction code in step 176, and if the transaction code and/or other purchase data corresponds to a previously stored ad or hash representing an ad, then the ad server credits the user's account, in step 180. Following this, the advertiser is billed for the ad in step 184. As a result, the advertiser is charged for ads that are both served and result in a purchase. A confirmation message may then be sent from the ad server to the mobile device, in step 186, which displays, for example, "OK", which the user would see in response to his clicking on one of the top three soft buttons on the screen 164 of the mobile device. The purchase data may then be deleted, in step 194, from the purchase history database. Similarly, if the user had selected the cancel option from screen 164, then the purchase would be directly deleted from the purchase history database in step 194. In either case, the process then ends at 196. It may of course be repeated as more ads are clicked or otherwise positively interacted with and more purchases are made. In alternate embodiments, the purchase data may be retained and reused for various promotional or other purposes.

If the user does not use the mobile device to make the purchase, then the system can still work if the user sends the transaction code to the server in another way. For example, the user may email the code, enter it in a form on the ad server's mobile or regular website, or take a photograph of the receipt and send it, or information within it, to the ad server. The receipt may contain the transaction code, a bar code, a QR code or other two dimensional bar code which can automatically be recognized by the AHA app, or by software running on the ad server.

Screen display 164 may be set up to appear immediately after a purchase is made, or it may be recalled as and when the user chooses. For example, it may be more convenient for the user to review his purchases for the past week all in one go. However, in some embodiments, the amount redeemable for each purchase may be set up to decrease with time, since recent information may be more valuable to the merchants than older information, and payments to users may be better managed over a shorter timescale than a long one.

### Ad Store Button

Instead of, or as well as, ad interactions being recorded and stored in monitoring center 30, sites with promotional offers that a user browses to may be recorded. This eliminates the need for the user to print out a coupon from the site, keep it in a safe place and then remember to take it to the store to be redeemed. Such sites may include a button that may be clicked by the user to store such a coupon, so that the user positively identifies which sites are stored in the history. These sites may be displayed on mobile or desk top computers. Where the sites are displayed on other than the user's mobile device (e.g. user's laptop, desktop or another of the user's mobile devices), the click history stored by the monitoring server is persisted to the user's mobile device by the persistent agent. The sites with these buttons may be arrived at via an ad, via the direct entry of a URL or by clicking another link.

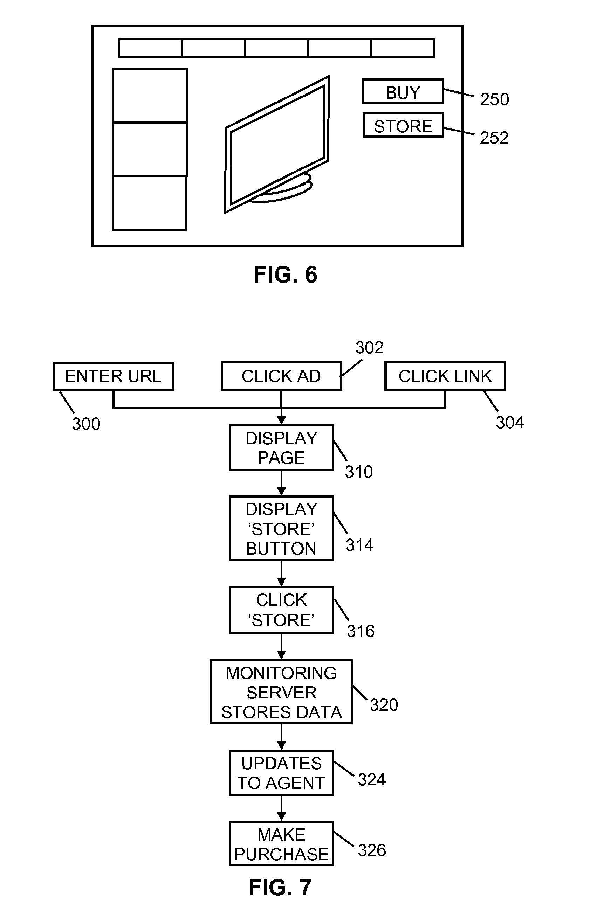

Referring to FIG. 6, a desktop computer screen shot is shown of a site of a business that sells televisions. The user has the option to buy a television by clicking the Buy button 250, which will lead the user to an online checkout where payment and delivery details can be entered. Also shown is a Store button 252, which, when clicked, will store the fact that the user is interested in the product in the database 32 of the monitoring server 30. Clicking the button may also cause a promotional code to be stored as well, so that if the user later visits a corresponding store to purchase the product, the code can be retrieved and the user may be able to get a discount, or to earn a payment for divulging the fact that he made the purchase after having visited the business's website. The database may store the fact that the user landed on the page after clicking an ad, after entering a URL directly, or by clicking any other kind of link.

FIG. 7 shows a process relating to the ad store button described above. The process starts with a user either entering a URL in the address field of a browser in step 300, clicking an ad in step 302, or clicking another link in step 304. In step 310, the landing page is displayed on the user's device, whether it be a mobile or desktop device, and a Store button 252 is also displayed, in step 314, on the page. The user clicks the Store button in step 316, which results in the data associated with the button being sent to the monitoring server, in step 320. The data may include the ad identification, where appropriate, a discount amount, an amount to pay the user if a purchase occurs and the purchaser divulges his related ad click data, a location of a store or stores, a date and time. etc. The amounts may depend on how the user arrived at the landing page. If the device is other than the user's mobile device, then the monitoring server sends an update, in step 324, to the agent on the mobile device 20 so that the ad click history database on it can be updated. The update may be sent immediately, during a later scheduled communication with the agent, or when the agent calls in. Later, in step 326, the user makes a purchase. After the purchase, the user may be given the option to divulge his prior ad click history relating to the purchase. Alternately, the fact that the user clicked the Store button in step 316 may be understood to grant permission for the information to be automatically divulged, if the user chooses to set the system up in this way.

### Variations and Further Features

Examples of personal mobile electronic devices 20 include an AndroidTM device, a WindowsTM phone, an iPadTM tablet, an iPod TouchTM media device and an iPhoneTM smart phone. Still further types of personal mobile electronic device can be envisaged for use in the system 10.

A user may view an ad using a device other than mobile device 20, such as using a laptop or desktop computer, or even another of the user's mobile devices. These latter devices may each be installed with an AHA which is linked to the user's ad viewing history account, such that a user's ad viewing history, irrespective of which of the user's devices is used, is eventually downloaded to or available at the user's mobile device 20. This allows the ad view to be linked to a corresponding purchase at the time of the purchase, even if the ad was viewed using a different device.

Business 60 does not necessarily need to have a brick and mortar store, but may instead be an online-only business that has warehouses which are inaccessible to the general public, a business that uses drop shipping, or a business that provides only electronic content, e.g. via the internet. As such, an embodiment of the system 10 can be used for online purchases as well as offline purchases in brick and mortar stores.

Where the various components of the system are connected, they may be connected directly or indirectly, via wired, wireless or both types of connection.

Ads that are clicked to remove them from the display on the user's device may also be recorded. These may be ads that pop up or pop under the window that is being viewed, ads that are overlaid on a video, played before, during or after a video, or any other form of ad. It may be valuable for an ad serving company and advertisers to know which ads are deleted and/or ignored, and this may be especially useful in relation to ads for similar goods that are clicked, or otherwise positively interacted with, particularly if they eventually lead to a purchase.

The ad server may provide the user with an account from which purchases are made, in which case the ad server and the financial server would belong to the same entity. Alternately, the entity operating the monitoring server may be combined with either or both of the entities managing the ad server and the financial server.

In some embodiments, the AHA on the remote device may be supported by an agent. Such an agent, as used herein, is a software, hardware or firmware (or any combination thereof) agent that is ideally persistent and stealthy, and that resides in a host computer or other electronic device. The agent facilitates servicing functions which require communication with a remote server, such as a monitoring server 30. In some embodiments, the agent is tamper resistant and is enabled for supporting and/or providing various services such as data delete, firewall protection, data encryption, location tracking, message notification, and software deployment and updates. An illustrative embodiment of a suitable agent is found in the commercially available product Computrace Agent™. The technology underlying the Computrace Agent™ has been disclosed and patented in the U.S. and other countries, the patents having been commonly assigned to Absolute Software Corporation. See, for example, U.S. Pat. Nos. 5,715,174; 5,764,892; 5,802,280; 6,244,758; 6,269,392; 6,300,863; and 6,507,914; and related foreign patents. Details of the persistent function of the agent are disclosed in U.S. Patent Application Publication No. US2005/0216757 and US Patent No. 8,418,226. Ideally, the agent is able to self-repair if it includes software. It may in part or in whole be located in the BIOS, EFI or equivalent location in a mobile electronic device. Communications may be initiated by the agent, by the remote server or by both. The agent may be divided into multiple parts in different locations within an electronic device. The agent may ensure the presence of the AHA and its integrity, and if it is found to be compromised or out of date, it can initiate the download of a new or replacement application from the server. The agent may also ensure the integrity of the ad click history database 124 and/or the purchase history database 146. Such integrity checks may be performed from time to time, for example, periodically, randomly, semi-randomly, upon every ad-click, upon every few ad-clicks, upon switching on the device, switching off the device, changing the power state of the device, or whenever the agent communicates with the monitoring server.

Processors described herein, whether in the server or the remote devices, may include one or more constituent processors, or one or more processing cores. Components of the system may be embodied on more than one server, and other architectures are also possible. Where a single server is shown, it is to be understood that it may represent one or more servers, which may be co-located or geographically separated. Memories may be divided into separate components and different types. Components may be incorporated wholly or partially in other components described herein.

Steps in the flowcharts may be carried out in a different order to those shown, they may be interchanged and/or combined with each other or from different flowcharts, other steps may be added and one or more may be omitted. For example, if the revealing of purchase information and related ad viewing information is set to automatic, then the process in FIG. 5 may jump from step 156 to step 160. Databases may be organized in different ways. Buttons and options displayed on the screens may be altered or omitted, or additional buttons may be included.

Some of the functions illustrated as being performed by the mobile device 20 may instead be carried out by the monitoring server 30. For example, step 154, in which it is determined whether an ad related to the purchase was clicked, may be carried out at the monitoring server 30 instead of at the mobile device 20. As another example, step 150, in which the location may be carried out at the server 30, or a third party server, based on information detected by the mobile device 20 and transmitted to the server.

### Industrial applicability

Users are given more control over what happens to their private information in relation to purchases and ad interaction. Advertisers are provided with specific information that relates a specific purchase to a prior, specific viewing of an online ad. By combining the traditionally disparate functions of mobile device purchasing and direct and specific feedback to advertisers in the system that has been disclosed, extremely minimal effort on the behalf of everyday users can be used to harvest data that is vitally important to the advertisers but almost useless to the users.

Given that people are generally becoming more and more sensitive to privacy issues, and since it is possible to visit the site an ad points to without the ad server knowing, either by hiding one's identity or by bypassing the 'click' stage, it may become more important for the ad servers to receive information from users who knowingly and actively provide it.

The present description is of the best presently contemplated mode of carrying out the subject matter disclosed and claimed herein. The description is made for the purpose of illustrating the general principles of the subject matter and is not be taken in a limiting sense; the claimed subject matter can find utility in a variety of implementations without departing from the scope of the invention made, as will be apparent to those of skill in the art from an understanding of the principles that underlie the invention.

## Claims

1. A computer-implemented method, comprising:
- maintaining, in computer storage, a record of ads accessed by a user on one or more devices;
- detecting a purchase of an item, said purchase made using one of said devices;
- determining, based on the record of accessed ads, whether the item purchased is associated with an ad accessed on the one or more devices; and
- presenting the user of the one or more devices with an option to disclose, to an entity associated with the ad, information that associates the purchase with a user access to the ad.

2. The method of claim 1, wherein one of said devices is a mobile device.

3. The method of claim 2, wherein said one or more devices is a mobile device.

4. The method of one of the preceding claims, wherein said computer storage is in the mobile device.

5. The method of one of the preceding claims, wherein said record is maintained by a persistent agent in the mobile device.

6. The method of one of the preceding claims, wherein the presenting is in response to detecting that the purchased item is associated with an accessed ad.

7. The method of one of the preceding claims, further comprising
- calculating a monetary compensation amount to be paid to the user in exchange for disclosing the information.

8. The method of one of the preceding claims, further comprising:
- receiving an instruction to disclose the information to the entity associated with the ad; and
- transmitting the information to the entity.

9. The method of one of the preceding claims, further comprising:
- maintaining a further record, the further record being of ads that are removed by the user from the one or more devices;
- receiving an instruction to disclose the further record to one or more entities associated with the removed ads and
- transmitting the further record to said one or more entities.

10. The method of one of the preceding claims, further comprising:
- detecting a further purchase, of a further item, said further purchase not made with one of said devices;
- receiving a transaction code relating to the further purchase;
- determining, based on the transaction code and the record of accessed ads, whether the further item purchased is associated with an ad accessed on the one or more devices; and
- presenting the user of the one or more devices with an option to disclose, to a further entity associated with the ad, further information that associates the further purchase with a user access to the ad.

11. The method of claim 10, further comprising:
- receiving an instruction to disclose the further information to the further entity; and
- transmitting the further information to the further entity.

12. The method of one of claims 8-11, wherein:
- said instruction is received prior to maintaining the record of ads; and
- said instruction is an instruction to automatically disclose the information to the entity when a purchase is detected.

13. A non-transitory computer readable medium having stored thereon a mobile application, said mobile application comprising executable program code that directs a mobile device to perform a method according to one of the preceding claims.

14. A system for tracking purchases related to previously viewed ads comprising:
- a computer readable storage for storing histories of ad interactions;
- a module for detecting when a payment has occurred;
- a module for associating the payment with an ad;
- a module for receiving a user's permission to divulge said association;
- a module for charging an advertiser, who placed the ad, after said permission has been received and said association has been divulged; and
- a module for remunerating said user after said association is divulged.
